# DEMANDE DE BREVET EUROPEEN

(11) **EP 2 632 004 A1**
(43) Date de publication de la demande: **28.08.2013**
(21) Numéro de dépôt: 12305205.2
(22) Date de dépôt: 22.02.2012
(51) Int. Cl.: H02G 3/14

(54) **Appareil électrique muni d'un insert pour la fixation du couvercle**

(71) Demandeur: Berker GmbH & Co. KG, 58579 Schalksmühle (DE)
(72) Inventeur: Conzadori, Remo, 25018 MONTICHIARI (BS) (IT); Pirlo, Luigi, 25078 VESTONE (BS) (IT)
(74) Mandataire: Nuss, Laurent

(57) **Abrégé**

La présente invention a pour objet un appareil électrique, du type interrupteur et/ou socle de connexion, destiné à être monté en saillie contre ou encastré dans une paroi, comprenant au moins un bloc fonctionnel électrique, un élément de montage (4) pour le montage à la paroi et la fixation dudit au moins un bloc fonctionnel, et un couvercle (5), placé sur l'élément de montage (4), définissant un plan principal et formant la façade de l'appareil électrique visible après installation.

Cet appareil électrique est caractérisé en ce qu'il comprend au moins un moyen de fixation (6) du couvercle (5), comprenant, d'une part, un insert, et, d'autre part, un premier moyen de butée (7) solidaire du couvercle (5) ainsi qu'un deuxième moyen de butée (8) solidaire de l'élément de montage (4), l'insert étant apte, dans une position dite verrouillée, à être interposé, au moins en partie, entre ledit premier moyen de butée (7) et ledit deuxième moyen de butée (8), de sorte à empêcher un éloignement du couvercle (5) par rapport à l'élément de montage (4), et, dans une position dite libre, à ne pas retenir le couvercle (5).

## Description

Le domaine de la présente invention est celui des appareils pour installation électrique pour le bâtiment, et l'invention a plus particulièrement pour objet un appareil électrique particulier.

Lorsqu'un appareil électrique, du type interrupteur ou socle électrique, doit être compatible avec des normes d'étanchéité supérieure, par exemple IP44, IP55 ou IP66, il est bien connu d'aménager un joint entre, d'une part, l'élément de montage, qu'il prenne la forme d'une boîte ou d'un cadre plat pour un montage encastré, et, d'autre part, le couvercle, qui vient être apposé contre ledit élément de montage. Le couvercle est ensuite fermement maintenu contre l'élément de montage, de sorte que la compression du joint entre les deux contribue à l'étanchéité et que la zone d'accueil du bloc électrique, traitant généralement des électricités dangereuses pour l'homme, soit inaccessible aux particules et poussières.

Un joint tel que décrit plus haut prend généralement la forme d'un joint s'étendant le long d'un contour fermé, suivant classiquement, par exemple, la bordure supérieure de l'éventuelle boîte de montage, voir par exemple EP 1 253 609. Ce joint peut aussi prendre la forme d'une membrane, comme dans DE 102 34 727 ou EP 0 122 465.

Quel que soit le mode de fixation du couvercle, il est impératif que cette fixation maintienne une bonne compression du joint. Il est, en outre, souhaitable d'avoir un mode de fixation ergonomique, que l'installateur peut bien différencier des autres fixations de l'appareil, puisque directement lié à la compression du joint et à l'étanchéité.

La présente invention vise à atteindre au moins une partie et préférentiellement tous ces objectifs et propose ainsi de maintenir le couvercle à l'aide d'un insert, intercalé entre, d'une part, une partie du couvercle, et, d'autre part, une partie de l'élément de montage, de sorte que tant l'insert que le couvercle sont pris ensemble en étau entre deux portions de l'élément de montage.

A cet effet, l'invention a pour objet un appareil électrique, notamment du type interrupteur et/ou socle de connexion pour fiche électrique, destiné à être monté en saillie contre ou encastré dans une paroi, comprenant au moins un bloc fonctionnel électrique, un élément de montage pour le montage à la paroi et la fixation dudit au moins un bloc fonctionnel, tel qu'une boîte pour un montage en saillie ou un support plat pour un montage encastré, et un couvercle, placé sur l'élément de montage, définissant un plan principal et formant la façade de l'appareil électrique visible après installation.

Cet appareil électrique est **caractérisé en ce qu'**il comprend au moins un moyen de fixation du couvercle, comprenant, d'une part, un insert, et, d'autre part, un premier moyen de butée solidaire du couvercle ainsi qu'un deuxième moyen de butée solidaire de l'élément de montage, l'insert étant apte, dans une position dite verrouillée, à être interposé, au moins en partie, entre ledit premier moyen de butée et ledit deuxième moyen de butée, de sorte à empêcher un éloignement du couvercle par rapport à l'élément de montage, et, dans une position dite libre, à ne pas retenir le couvercle.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- la figure 1 est une section d'un mode de réalisation de l'invention ;
- la figure 2 est une section montrant un détail de l'accrochage d'un enjoliveur dans un couvercle ;
- la figure 3 est une section montrant l'intégralité d'un élément de montage sous forme de boîte pour montage en saillie ;
- la figure 4 illustre la zone d'action de l'insert ;
- la figure 5 montre l'insert placé autour de la tête de la tige ;
- la figure 6 est une coupe dans un plan perpendiculaire au plan principal du couvercle ;
- les figures 7 et 8 montrent l'installation d'un moyen de fixation selon l'invention ;
- la figure 9 montre, dans un mode de réalisation rudimentaire, le principe de positionnement de l'insert, entre l'élément de montage et le couvercle, lui-même contre l'élément de montage.

L'invention a donc pour objet un appareil électrique 1, notamment du type interrupteur et/ou socle de connexion pour fiche électrique, destiné à être monté en saillie contre ou encastré dans une paroi, comprenant au moins un bloc fonctionnel électrique, un élément de montage 4 pour le montage à la paroi et la fixation dudit au moins un bloc fonctionnel, tel qu'une boîte pour un montage en saillie ou un support plat pour un montage encastré, et un couvercle 5, placé sur l'élément de montage 4, définissant un plan principal et formant la façade de l'appareil électrique 1 visible après installation.

Le bloc fonctionnel, dans le cas d'un interrupteur, monostable ou bistable, réalise la commutation électrique, ou, dans le cas d'un socle de connexion, le contact des broches d'une fiche électrique au réseau électrique. Le bloc fonctionnel est donc généralement relié à un réseau électrique de basse tension, soit par exemple 230 Volts et 16 Ampères, mais peut aussi être un bloc fonctionnel de très basse tension, destiné à des applications de communication, et fonctionnant avec des tensions de l'ordre de 12 Volts. Il peut aussi s'agir d'autres applications comme de la signalisation, ou une radio.

L'appareil électrique 1 peut être monoposte, comprenant donc un seul bloc fonctionnel, ou multiposte, c'est-à-dire comprenant plusieurs blocs fonctionnels, différents ou identiques. Il peut donc être la combinaison d'un socle de connexion et d'un interrupteur, et muni de blocs fonctionnels correspondants.

Le couvercle 5 est destiné, au niveau d'une interface principale 2, à être posé contre l'élément de montage 4, afin de le recouvrir. Comme il sera décrit plus loin, un couvercle 5 classique comprend une plaque 20 et au moins un enjoliveur 21, adapté à l'au moins un bloc fonctionnel. Le couvercle 5 prend la forme d'un élément sensiblement plat, et, une fois l'appareil électrique 1 installé dans ou contre la paroi, le plan principal du couvercle 5 est parallèle à la paroi. Le au moins un bloc fonctionnel est fixé à l'élément de montage 4 par encliquetage ou vissage.

Selon l'invention, l'appareil électrique 1 comprend au moins un moyen de fixation 6 du couvercle 5, comprenant, d'une part, un insert, et, d'autre part, un premier moyen de butée 7 solidaire du couvercle 5 ainsi qu'un deuxième moyen de butée 8 solidaire de l'élément de montage 4, l'insert étant apte, dans une position dite verrouillée, à être interposé, au moins en partie, entre ledit premier moyen de butée 7 et ledit deuxième moyen de butée 8, de sorte à empêcher un éloignement du couvercle 5 par rapport à l'élément de montage 4, et, dans une position dite libre, à ne pas retenir le couvercle 5. Le couvercle 5 est donc maintenu contre l'élément montage 4, au niveau de l'interface principale 2, grâce à cet insert. Plus précisément, tant l'insert que le couvercle 5 sont pris entre l'interface principale 2 et le deuxième moyen de butée 8. La force avec laquelle l'insert garantit que le couvercle 5 est maintenu contre l'élément de montage 4 au niveau de l'interface principale 2 dépend donc de la dimension qu'il impose entre le premier élément de butée 7 et le deuxième élément de butée 8.

Cela permet donc de faciliter la fixation du couvercle 5 à l'élément de montage 4, par la simple pose de l'insert entre le premier moyen de butée 7 et le deuxième moyen de butée 8, et de créer ainsi un verrouillage de bonne tenue mécanique, le couvercle 5 pouvant être maintenu fermement plaqué contre l'élément de montage 4 au niveau de l'interface principale 2, avec une bonne compression d'un éventuel joint d'interface 26 entre le couvercle 5 et l'élément de montage 4, voire, comme il sera décrit plus loin, d'un joint interne 27 au sein même du couvercle 5.

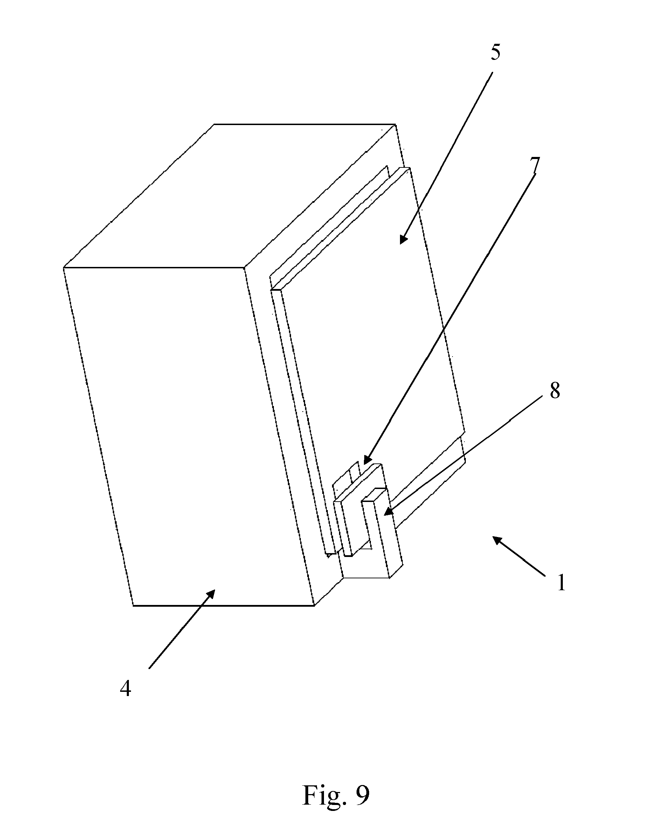

Comme il sera encore décrit plus loin, le couvercle 5 est positionné, au niveau de l'interface principale 2, contre l'élément de montage 4 dans lequel se trouve le au moins un bloc fonctionnel, puis l'insert est intercalé entre le premier moyen de butée 7 et le deuxième moyen de butée 8. La figure 9 montre de façon schématique le principe de fonctionnement de l'insert. L'insert est donc placé entre, d'une part, l'élément de montage 4, et plus particulièrement le deuxième moyen de butée 8 qui en fait partie, et, d'autre part, le couvercle 5 et plus particulièrement le premier moyen de butée 7 qui en fait partie, le couvercle 5 étant, quant à lui, pris entre ledit élément de montage 4 au niveau de l'interface principale 2 et l'insert.

Le couvercle 5 et l'insert sont donc tous les deux pris en étau, l'un contre l'autre, entre deux portions de l'élément de montage 4, l'une au niveau de l'interface principale 2, l'autre étant formée par le deuxième moyen de butée 8, décalé de l'interface principale 2.

L'élément de montage 4 lui-même, au travers du deuxième moyen de butée 8, retient donc le couvercle 5 à proximité de l'élément de montage 4 au niveau de l'interface principale 2, c'est-à-dire à proximité de la paroi de montage une fois l'appareil électrique 1 installé, de sorte que le couvercle 5 ne peut pas être ôté en donnant accès à la cavité d'accueil dans laquelle se trouve le au moins un bloc fonctionnel et que la force avec laquelle le couvercle 5 reste plaqué contre l'élément de montage 4 au niveau de l'interface principale 2 peut rester suffisamment importante pour garantir l'étanchéité.

Comme il sera décrit plus loin, si l'appareil électrique 1 doit répondre à des normes d'étanchéité, il est important que des particules solides, voire des liquides, ne puissent pénétrer dans la cavité d'accueil dans laquelle se trouve le au moins un bloc fonctionnel. Il est donc courant de prévoir au moins un joint d'interface 26 entre le couvercle 5 et l'élément de montage 4, au niveau de l'interface principale 2. Le moyen de fixation 6 selon l'invention permet de maintenir le couvercle 5 fermement plaqué contre l'élément de montage 4, de sorte que ledit joint d'interface 26 reste comprimé.

Selon une caractéristique additionnelle possible, le passage de l'insert entre la position verrouillée et la position libre se fait avec un mouvement de rotation de l'insert autour d'un axe parallèle au plan principal. Un des intérêts d'un mouvement de rotation autour d'un tel axe est qu'il se différencie de la rotation des éventuelles vis de fixation du couvercle 5 ou de l'élément de montage 4, cette dernière fixation se faisant par rotation autour d'un axe perpendiculaire au plan principal, et que les risques de confusion entre les différentes opérations lors de la mise en place de l'appareil électrique 1 sont donc moindres.

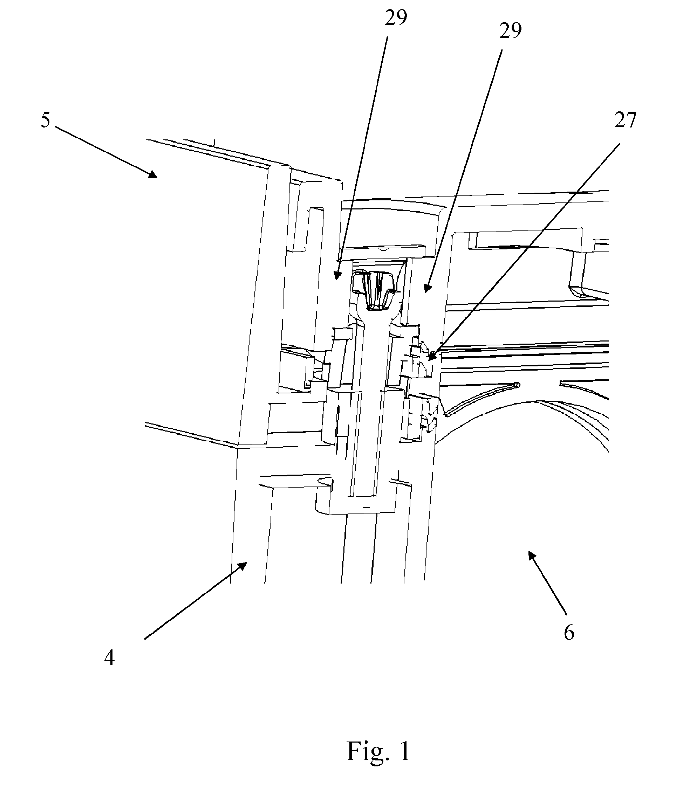

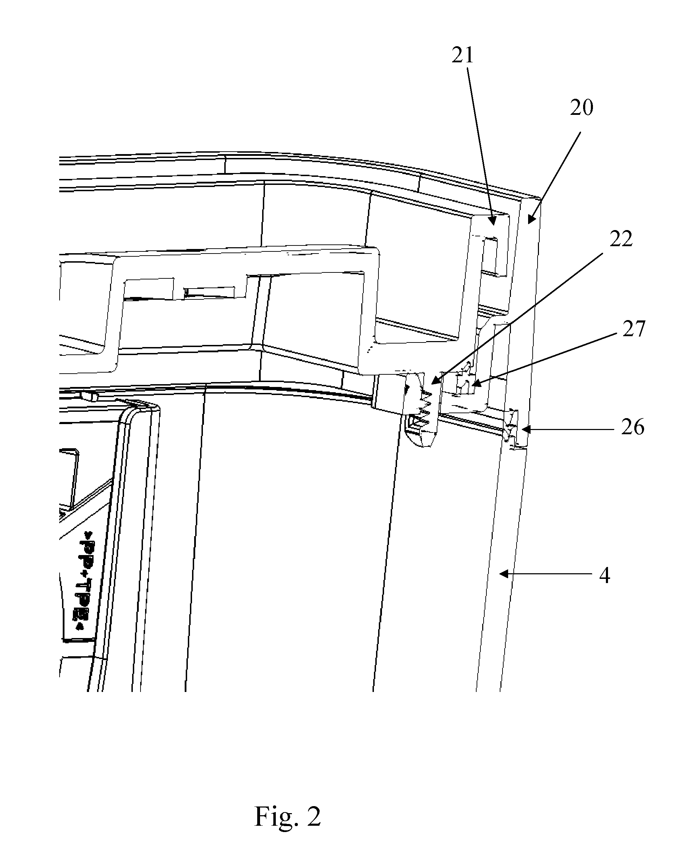

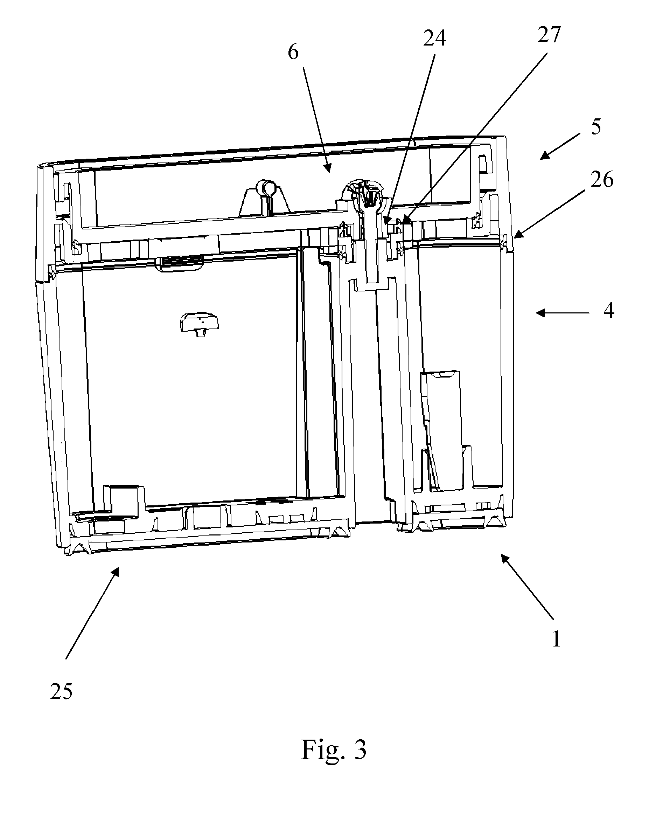

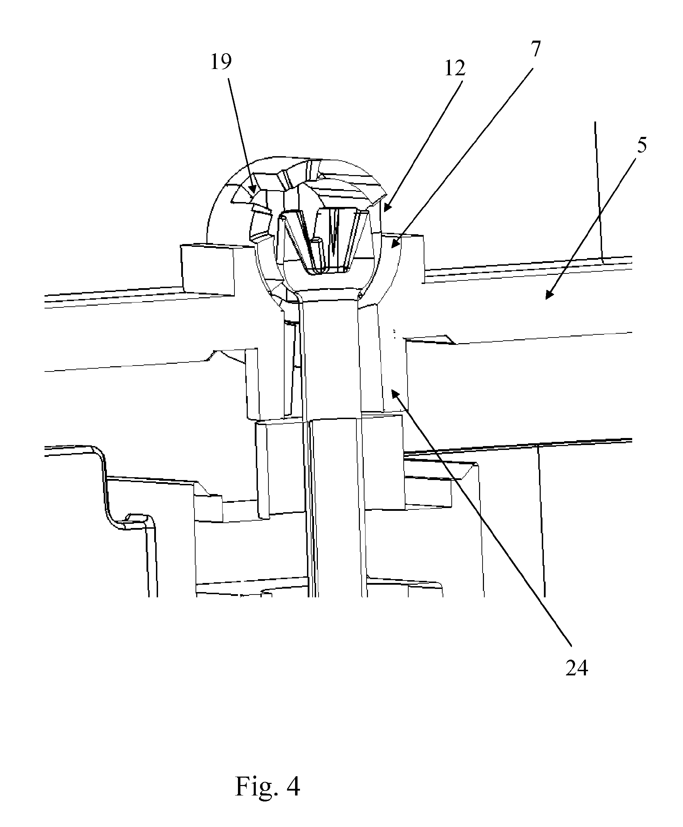

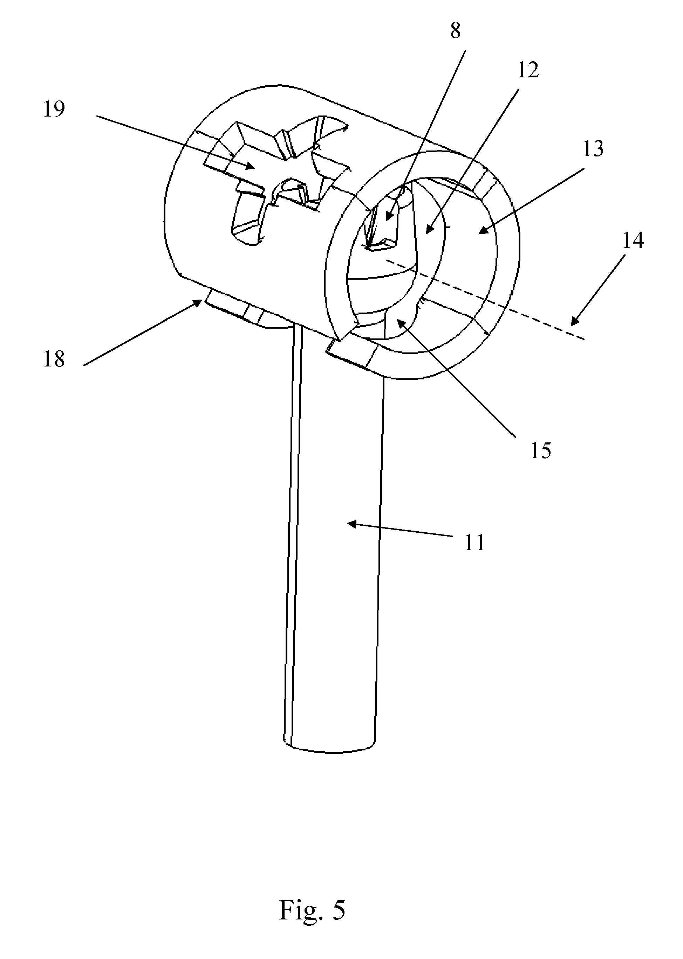

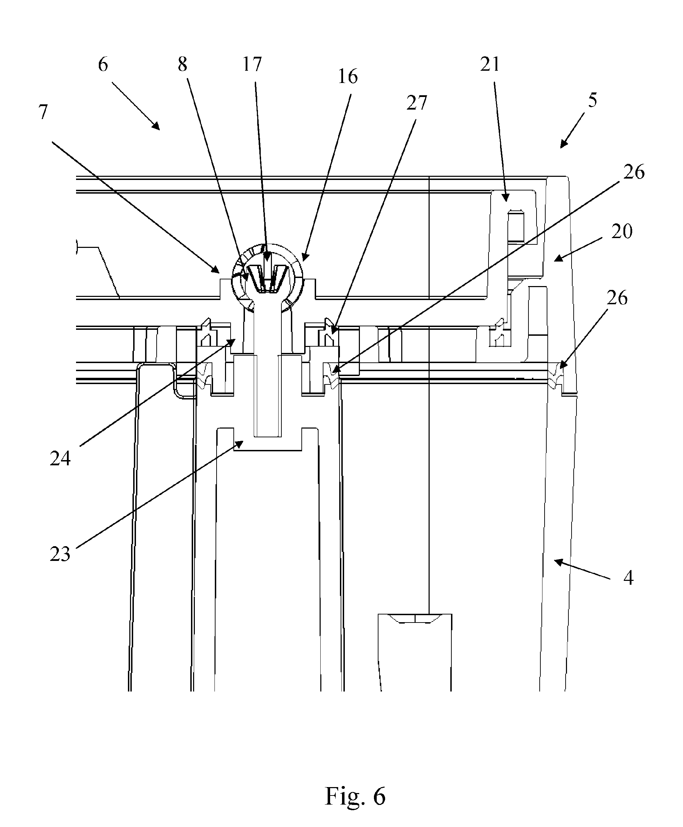

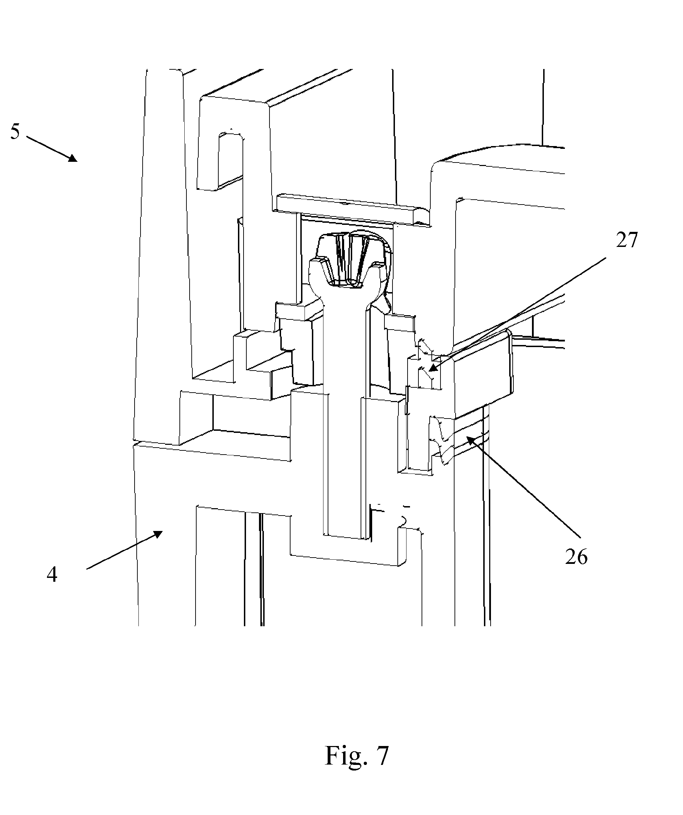

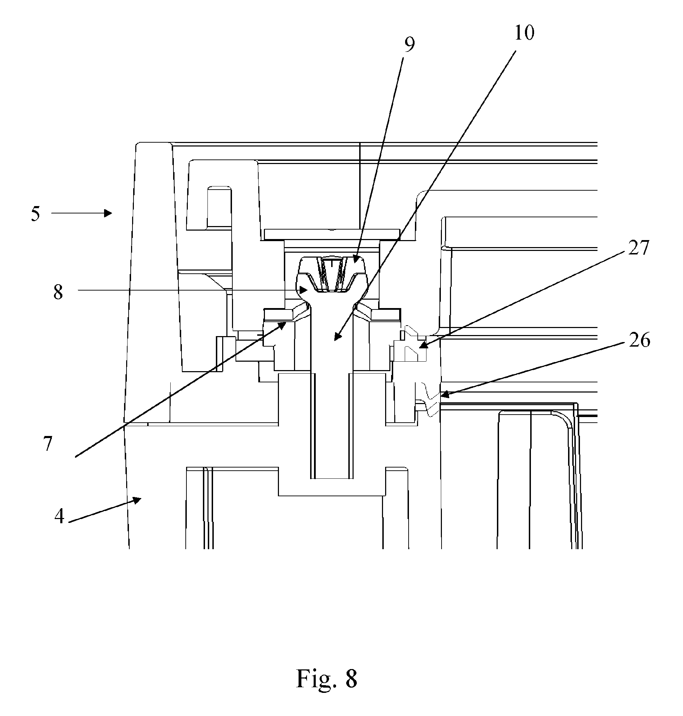

Dans certains modes de réalisation, dont celui illustré dans les figures 1 à 8, l'un des moyens de butée, à savoir soit le premier moyen de butée 7 soit le deuxième moyen de butée 8, préférentiellement le deuxième moyen de butée 8, consiste essentiellement en une tête 9 d'une tige 10 dont le corps 11 est plus fin que ladite tête 9, l'autre moyen de butée, préférentiellement le premier moyen de butée 7, consistant essentiellement en une paroi, notamment du couvercle 5, traversée par la tête 9, l'insert présentant un passage sélectif 12 au niveau duquel ledit insert peut être traversé par le corps 11 de la tige 10 mais non par la tête 9. La tige 10 est fermement fixée à l'élément de montage 4, sans possibilité de déplacement dans le sens de son axe longitudinal, afin de ne pas faire varier l'espace disponible pour le couvercle 5 et l'insert.

Dans ces modes de réalisation, il est ainsi possible à l'insert d'être placé autour du corps 11 de la tige 10, situé alors dans le passage sélectif 12, entre le premier moyen de butée 7 et le deuxième moyen de butée 8, contribuant ainsi à mieux répartir les forces de maintien du couvercle 5 sur l'élément de montage 4. Cela facilite aussi la mise en place de l'insert entre le premier moyen de butée 7 et le deuxième moyen de butée 8, puisqu'il peut être glissé de part et d'autre du corps 11 de la tige 10.

Dans des modes de réalisation particuliers, notamment illustrés aux figures 1 à 8, l'insert prend la forme d'une douille 13 cylindrique, présentant un axe de symétrie 14 radiale, parallèle au plan principal et autour duquel elle tourne pour passer de la position verrouillée à la position libre, le deuxième moyen de butée 8 prenant notamment la forme d'un logement semi circulaire aménagé dans le couvercle 5. Comme il sera décrit plus loin, ce logement semi circulaire peut former un guidage extérieur 16 pour la rotation de l'insert sous forme de douille 13.

L'insert que forme la douille 13 pivote donc autour de l'axe de symétrie 14 pour passer d'une position libre dans laquelle il ne s'interpose pas entre le couvercle 5 et le reste de l'élément de montage 4, à une position de verrouillage dans laquelle il s'interpose entre ledit couvercle 5 et le reste de l'élément de montage 4. Le fait de devoir imprimer un mouvement de rotation à une douille 13 plutôt qu'à une vis évite aussi la confusion lors du montage de l'appareil électrique 1.

Selon une caractéristique additionnelle possible, le au moins un moyen de fixation 6 comprend, en outre, un guidage en rotation de la douille 13 autour de son axe de symétrie 14, aménagé au niveau de l'élément de montage 4 et/ou du couvercle 5, ce qui permet de contrôler le mouvement de la douille 13 lorsque l'insert passe de la position libre à la position verrouillée et inversement, le corps 11 de la tige 10 circulant, comme il sera décrit plus loin, dans un passage sélectif 12 dans lequel peut circuler le corps 11 mais non la tête 9, et donc de garantir que ce mouvement aboutisse à une position dans laquelle l'insert en forme de douille 13 est correctement intercalé entre le premier moyen de butée 7 et le deuxième moyen de butée 8. C'est donc notamment grâce à la tête 9, formant le deuxième moyen de butée 8, et au passage sélectif 12, qu'elle ne peut pas traverser, que l'insert est maintenu, le couvercle 5 par conséquent aussi.

Selon une caractéristique additionnelle possible, le guidage comprend, d'une part, un guidage extérieur 16, pour l'extérieur de la douille 13, et, d'autre part, un guidage intérieur 17, pour l'intérieur de la douille 13, un passage de guide 18 étant aménagé dans la douille 13 pour introduire le guidage intérieur 17 dans ladite douille 13. Le guidage extérieur 16, formant préférentiellement lui-même le premier moyen de butée 7, est avantageusement sous la forme d'un logement semi circulaire aménagé dans le couvercle 5 et où la douille 13 peut tourner, le guidage intérieur 17 prenant la forme de deux parois 29 s'étendant sensiblement selon un diamètre intérieur de la douille 13 installée. L'insert présente, en outre, un passage de guide 18 sous la forme d'une rainure s'étendant le long d'une génératrice de la douille 13 et que lesdites parois 29 peuvent traverser. On aboutit ainsi à un guidage de bonne qualité sans pièce supplémentaire.

Le couvercle 5, et, plus précisément l'enjoliveur 21 le cas échéant, présente pour le au moins un moyen de fixation 6 qui le fixe à l'élément de montage 4, un plot creux 24, présentant un orifice de passage 38 dans lequel toute la tige 10 peut circuler et au bout duquel se trouve le premier moyen de butée 7.

La mise en place du couvercle 5 s'effectue de la façon suivante. L'insert est tout d'abord placé dans le couvercle 5, autour du guidage intérieur 17, en alignant le passage de guide 18 avec les deux parois 29, de sorte que ces dernières peuvent aboutir à l'intérieur de la douille 13 lorsque cette dernière est poussée dans le couvercle 5 jusqu'au contact avec le premier moyen de butée 7, sous la forme d'un logement semi circulaire créant un guidage extérieur 16. Après cette opération, il suffit de pivoter légèrement la douille 13 autour de son axe de symétrie 14 pour que les parois 29 viennent sensiblement au contact de la paroi intérieure de la douille 13. Les parois 29 ont donc une hauteur correspondant sensiblement au diamètre intérieur de la douille 13. L'insert en forme de douille 13 est alors maintenu dans le couvercle 5 grâce à ces deux parois 29, contre le premier moyen de butée 7.

La tige 10 est préférablement installée dans l'élément de montage 4 lors de la fabrication de ce dernier. L'insert peut aussi être placé dans le couvercle 5 lors de la fabrication, préalablement à la mise en service dans une installation.

L'insert peut ensuite être déplacé, grâce à un mouvement de rotation de la douille 13 autour de son axe de symétrie 14, de sorte qu'un passage de butée 15, que présente l'insert et au niveau duquel il peut être traversé par le deuxième moyen de butée 8, arrive en vis-à-vis du deuxième moyen de butée 8, sous la forme d'une tête 9, lors de la mise en place du couvercle 5 contre l'élément de montage 4. L'insert n'empêche donc en rien que le couvercle 5 soit amené au voisinage immédiat de l'élément de montage 4 jusqu'à interface principale 2, puisque le deuxième moyen de butée 8 peut traverser le passage de butée 15. Le couvercle 5 est donc placé sur l'élément de montage 4, la tige 10 de chaque moyen de fixation étant alignée avec le passage de butée 15, de sorte que le premier moyen de butée 8, sous forme de tête 9, arrive au niveau du premier moyen de butée 7, sous forme de paroi semi circulaire pour une douille 13 formant l'insert. La tête 9, formant le premier moyen de butée 8, se retrouve donc à l'intérieur de la douille 13.

En pivotant ensuite l'insert en forme de douille 13 de sorte que le passage sélectif 12 arrive en vis-à-vis du premier moyen de butée 8, le mouvement du couvercle 5 devient impossible, puisque le premier moyen de butée 8 ne peut pas traverser le passage sélectif 12, alors que le corps 11 peut y circuler.

Comme le montrent les figures 1 à 8, la douille 13 est placée de sorte que le contact avec, d'une part, le premier moyen de butée 7, et, d'autre part, le deuxième moyen de butée 8, se fasse au niveau, pour l'un d'eux, de la paroi intérieure de la douille 13, et, pour l'autre, de la paroi extérieure de ladite douille 13, son axe de symétrie 14 étant ainsi rendu parallèle au plan principal du couvercle 5, ce qui permet de limiter la distance qui sépare le premier moyen de butée 7 du deuxième moyen de butée 8 lorsque l'insert est installé entre eux et donc les dimensions de l'appareil électrique 1, mais aussi, éventuellement, d'utiliser un mouvement de rotation d'une douille 13 cylindrique autour de son axe de symétrie 14 radiale pour placer le corps 11 de la tige 10 dans le passage sélectif 12 et donc pour passer d'une configuration dans laquelle le au moins un moyen de fixation 6 maintient le couvercle 5 en position par rapport à l'élément de montage 4 à une configuration dans laquelle il ne maintient pas le couvercle 5 en position par rapport à l'élément de montage 4.

Ainsi, c'est la paroi constitutive de l'insert qui vient s'interposer entre le premier moyen de butée 7 et le deuxième moyen de butée 8.

L'insert peut donc venir autour du deuxième moyen de butée 8 en forme de tête 9 d'une tige 10. Le premier moyen de butée 8 se trouve alors à l'intérieur même de l'insert en forme de douille 13, et ce grâce au passage de butée 15 que présente l'insert, suffisamment grand pour laisser passer la tête 9. Lorsque le passage de butée 15 se trouve sous la tête 9, et donc au niveau du corps 11, l'insert peut être pivoté de sorte que le passage sélectif 12 arrive sous la tête 9 et circule autour du corps 11 de la tige 10. Comme il a été dit, le corps 11 peut circuler dans le passage sélectif 12, mais non la tête 9. L'insert est pivoté dans un guidage extérieur 16, sous forme d'une paroi concave rattachée au couvercle 5, et, comme la tête 9 ne peut traverser le passage de butée 12, l'insert est pris entre, d'une part, ledit guidage extérieur 16, formant le premier moyen de butée 7 rattaché au couvercle 5, et, d'autre part, le deuxième moyen de butée 8, rattaché à l'élément de montage 4.

Dans la position libre, le deuxième moyen de butée 8 sous forme de tête 9 est en vis-à-vis du passage de butée 15 de l'insert, à travers lequel ledit premier moyen de butée 8 peut circuler. Dans la position verrouillée, le deuxième moyen de butée 8 sous forme de tête 9, se trouve au niveau du passage sélectif 12, à travers lequel il ne peut pas passer, l'insert portant le passage sélectif 12 reposant, en outre, contre le couvercle 5 au niveau du première moyen de butée 7, notamment sous la forme d'une paroi de guidage extérieure 16.

Selon une caractéristique additionnelle possible, l'insert est adapté pour être actionné avec un outil allongé, type tournevis, formant un levier pivotant autour d'un axe parallèle au plan principal. Cela permet à un installateur, muni d'outils classiques, de mettre en oeuvre le moyen de fixation 6. L'insert est alors préférentiellement muni de rainures pour un outil plat du type tournevis.

A cet effet, l'insert présente un passage d'outil 19 dans lequel un levier, du type tournevis, peut être inséré pour créer le mouvement de rotation dudit insert, notamment grâce à un appui dans le deuxième moyen de butée 8, et faire ainsi circuler le passage sélectif 12 autour du corps 11 de la tige 10 dans un mouvement de rotation de la douille 13 autour de son axe. Le levier se déplace donc en restant sensiblement perpendiculaire à l'axe de rotation de l'insert.

Pour la mise en mouvement de l'insert, un outil plat, du type tournevis, est alors installé de sorte à traverser le passage d'outil 19 et aboutir dans une rainure aménagée dans le deuxième moyen de butée 9 alors sous forme de tête. L'extrémité de l'outil étant positionnée dans cette rainure, il ne reste plus qu'à imprimer à l'outil un mouvement de rotation autour d'un axe parallèle au plan principal, à savoir l'axe de symétrie 14 lui-même, le cas échéant, pour entraîner tout l'insert en rotation, grâce à la partie de l'outil dans le passage d'outil 19. L'outil forme donc un levier, déplacé dans un plan perpendiculaire à l'axe de rotation de l'insert, le couple mécanique à générer pour le pivotement de l'insert étant obtenu par démultiplication, compte tenu de la distance qui sépare la zone de manipulation du levier, proche de l'extrémité de l'outil opposée à celle en appui contre le deuxième moyen de butée 8 en forme de tête 9, et la zone d'action du levier sur l'insert, située au niveau de la paroi de la douille 13 elle-même, plus proche de l'axe de rotation.

Selon une caractéristique additionnelle possible, la tige 10 est ancrée dans l'élément de montage 4 par son extrémité opposée à la tête 9 sans possibilité de déplacement dans l'axe de la tige 10, notamment en surmoulant l'élément de montage 4 autour de la tige 10. La tige 10 est préférablement ancrée dans un plot 23 prévu à cet effet dans l'élément de montage 4. Si la tête 9 et le premier moyen de butée 7 viennent à être éloignés l'un par rapport à l'autre, l'insert n'aura plus le même effet de serrage. Il est donc important d'éviter que le deuxième élément de butée 8 et le premier élément de butée 7 puissent être éloignés l'un de l'autre. Dans les modes de réalisations où le deuxième élément de butée 8 est la tête 9 d'une tige 10, ancrée dans l'élément de montage 4, il est donc important de solidement ancrer ladite tige 10 dans ledit élément de montage 4, de sorte à éviter aussi que la mise en place de l'insert puisse par exemple avoir pour effet de faire sortir la tige 10 et donc d'éloigner le deuxième moyen de butée 8 du premier.

La tige 10 est donc préférablement noyée dans l'élément de montage 4, ce qui est tout particulièrement possible lorsqu'il prend la forme d'une boîte en plastique obtenue par injection, à l'aide d'un surmoulage. Si la tige 10 est insérée à l'aide d'un filetage dans l'élément de montage 4, il est utile de prévoir des éléments en empêchant la rotation ultérieure, lors de la mise en place, ce qui pourrait avoir pour effet de déplacer le deuxième moyen de butée 8 par rapport au premier. Les éventuelles rainures aménagées sur la tête 9, aptes à recevoir un outil plat du type tournevis, pourraient en effet amener un utilisateur à essayer de visser davantage la tige dans l'élément de montage 4, modifiant alors la distance entre le premier moyen de butée 7 et le deuxième moyen de butée 8, ou entre le premier moyen de butée 7 et l'interface princpale 2. Le serrage du couvercle 5 sur l'élément de montage 4, au niveau de l'interface principale 2, et donc la compression de l'éventuel joint d'interface 26 seraient donc dégradés.

Selon une caractéristique additionnelle possible, l'insert présente un passage de butée 15, au niveau duquel ledit insert peut être traversé par le deuxième moyen de butée 8, notamment un passage de butée 15 décalé du ou d'un passage de guide 18 pour guidage intérieur 17 de sorte que l'insert ne peut être dégagé de la tige 10 et du guidage intérieur 17 sans changer de position. Cela contribue à l'imperdabilité de l'insert, puisqu'une fois dans la position libre, il ne peut être dégagé du couvercle 5, puisque le guidage intérieur 17 n'est pas en vis-à-vis du passage de guide 18, qui est le seul endroit possible pour que les parois 29 formant le guidage intérieur 17 traversent la paroi constitutive de la douille 13 et la traversent.

Selon une caractéristique additionnelle possible, le couvercle 5 comprend, d'une part, une plaque 20 présentant au moins une ouverture 31, et, d'autre part, au moins un enjoliveur 21, compatible avec le au moins un bloc fonctionnel et placé dans ladite au moins une ouverture 31, notamment du type comprenant un puits pour fiche électrique ou comprenant une manette d'interrupteur et sa base, la plaque 20 étant maintenue entre le au moins un enjoliveur 21 et l'élément de montage 4, de sorte que le moyen de fixation 6, maintenu dans l'élément de montage 4, agit sur le au moins un enjoliveur 21, lui-même agissant sur la plaque 20, elle-même reposant contre l'élément de montage 4, ce qui permet d'utiliser une même plaque 20 pour différents types d'enjoliveur 21, de maintenir la plaque 20 par rapport à l'élément de montage 4 sans composant supplémentaire, mais aussi de réaliser, avec le au moins un moyen de fixation 6, une compression d'éventuels joints internes 27 qui seraient montés entre la plaque 20 et le au moins un enjoliveur 21 afin de contribuer à l'étanchéité de l'appareil électrique 1.

Selon une caractéristique additionnelle possible, le au moins un enjoliveur 21 est maintenu par deux moyens de fixation 6, positionnés à proximité de deux bords opposés dudit enjoliveur 21, et décalés l'un par rapport à l'autre, l'appareil électrique 1 comprenant en outre, deux moyens d'accrochage 22 dudit enjoliveur 21 à la plaque 20, disposés symétriquement aux moyens de fixation 6, et consistant essentiellement chacun en une patte munie de crochets et s'étendant à partir de l'enjoliveur 21, destinée à venir s'accrocher dans un trou prévu dans la plaque 20, ce qui permet d'avoir un montage de bonne qualité et économique pour l'enjoliveur 21.

L'enjoliveur 21 présente classiquement, dans le plan principal, une forme rectangulaire. Les deux moyens de fixation 6 sont alors aménagés pour être alignés dans une direction qui n'est parallèle à aucun des bords de l'enjoliveur 21. Ils sont préférentiellement positionnés symétriquement par rapport aux axes médians de l'enjoliveur 21, chacun à proximité d'un bord différent dudit enjoliveur 21.

Selon une caractéristique additionnelle possible, l'appareil électrique 1 comprend, en outre, un joint arrière 25, au niveau de la face de l'élément de montage 4 destinée à être en contact avec la paroi, un joint d'interface 26, entre l'élément de montage 4 et le couvercle 5, formant la zone d'appui du couvercle 5 sur l'élément de montage 4, et notamment aussi un joint interne 27, préférentiellement d'une seule pièce avec le joint d'interface 26, entre une plaque 20 et au moins un enjoliveur 21 que comprend le couvercle 5, formant la zone d'appui dudit au moins un enjoliveur 21 sur la plaque 20. L'insert permet de maintenir le couvercle 5 suffisamment proche de l'élément de montage 4 au niveau de leur interface principale 2 pour que le joint d'interface 26 reste comprimé. Dans les cas où le moyen de fixation 6 agit sur l'enjoliveur 21, lui-même agissant sur la plaque 20, elle-même en contact avec l'élément de montage 4 au niveau de l'interface principale 2, le au moins un moyen de fixation 6 garantit donc non seulement que le couvercle 5, et plus précisément la plaque 20, soit serré contre l'élément de montage 4 au niveau de l'interface principale 2, mais aussi que l'enjoliveur 21 soit serré contre la plaque 20. Il est alors possible de garantir la compression d'un joint interne 27 aménagé entre l'enjoliveur 21 et la plaque 20.

Selon une caractéristique additionnelle possible, l'appareil électrique 1 présente une pluralité de blocs fonctionnels, éventuellement différents, un seul couvercle 5, comprenant une seule plaque 20 et une pluralité d'enjoliveur 21, chaque enjoliveur 21 correspondant à un bloc fonctionnel et étant maintenu par au moins deux moyens de fixation 6. L'appareil électrique 1 peut donc être monoposte ou multiposte, et, dans ce cas, homogène ou présenter des fonctions différentes.

Bien entendu, l'invention n'est pas limitée aux mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Appareil électrique (1), notamment du type interrupteur et/ou socle de connexion pour fiche électrique, destiné à être monté en saillie contre ou encastré dans une paroi, comprenant au moins un bloc fonctionnel électrique, un élément de montage (4) pour le montage à la paroi et la fixation dudit au moins un bloc fonctionnel, tel qu'une boîte pour un montage en saillie ou un support plat pour un montage encastré, et un couvercle (5), placé sur l'élément de montage (4), définissant un plan principal et formant la façade de l'appareil électrique (1) visible après installation, appareil électrique (1) **caractérisé en ce qu'**
il comprend au moins un moyen de fixation (6) du couvercle (5), comprenant, d'une part, un insert, et, d'autre part, un premier moyen de butée (7) solidaire du couvercle (5) ainsi qu'un deuxième moyen de butée (8) solidaire de l'élément de montage (4), l'insert étant apte, dans une position dite verrouillée, à être interposé, au moins en partie, entre ledit premier moyen de butée (7) et ledit deuxième moyen de butée (8), de sorte à empêcher un éloignement du couvercle (5) par rapport à l'élément de montage (4), et, dans une position dite libre, à ne pas retenir le couvercle (5).

2. Appareil électrique (1) selon la revendication 1, **caractérisé en ce que** le passage de l'insert entre la position verrouillée et la position libre se fait avec un mouvement de rotation de l'insert autour d'un axe parallèle au plan principal.

3. Appareil électrique (1) selon l'une quelconque des revendications 1 ou 2, **caractérisé en ce que** l'insert est adapté pour être actionné avec un outil allongé, type tournevis, formant un levier pivotant autour d'un axe parallèle au plan principal.

4. Appareil électrique (1) selon l'une quelconque des revendications 1 à 3, **caractérisé en ce que** l'insert présente un passage d'outil (19) dans lequel un levier, du type tournevis, peut être inséré pour créer le mouvement de rotation dudit insert, notamment grâce à un appui dans le deuxième moyen de butée (8).

5. Appareil électrique (1) selon l'une quelconque des revendications 1 à 4, **caractérisé en ce que** l'insert prend la forme d'une douille (13) cylindrique, présentant un axe de symétrie (14) radiale, parallèle au plan principal et autour duquel elle tourne pour passer de la position verrouillée à la position libre.

6. Appareil électrique (1) selon la revendication 5, **caractérisé en ce que** le au moins un moyen de fixation (6) comprend, en outre, un guidage en rotation de la douille (13) autour de son axe de symétrie (14), aménagé au niveau de l'élément de montage (4) et/ou du couvercle (5).

7. Appareil électrique (1) selon la revendication 6, **caractérisé en ce que** le guidage comprend, d'une part, un guidage extérieur (16), pour l'extérieur de la douille (13), et, d'autre part, un guidage intérieur (17), pour l'intérieur de la douille (13), un passage de guide (18) étant aménagé dans la douille (13) pour introduire le guidage intérieur (17) dans ladite douille (13).

8. Appareil électrique (1) selon l'une quelconque des revendications 5 à 7, **caractérisé en ce que** la douille (13) est placée de sorte que le contact avec, d'une part, le premier moyen de butée (7), et, d'autre part, le deuxième moyen de butée (8), se fasse au niveau, pour l'un d'eux, de la paroi intérieure de la douille (13), et, pour l'autre, de la paroi extérieure de ladite douille (13), son axe de symétrie (14) étant ainsi rendu parallèle au plan principal du couvercle (5).

9. Appareil électrique (1) selon l'une quelconque des revendications 1 à 8, **caractérisé en ce que** l'un des moyens de butée, à savoir soit le premier moyen de butée (7) soit le deuxième moyen de butée (8), préférentiellement le deuxième moyen de butée (8), consiste essentiellement en une tête (9) d'une tige (10) dont le corps (11) est plus fin que ladite tête (9), l'autre moyen de butée, préférentiellement le premier moyen de butée (7), consistant essentiellement en une paroi, notamment du couvercle (5), traversée par la tête (9), l'insert présentant un passage sélectif (12) au niveau duquel ledit insert peut être traversé par le corps (11) de la tige (10) mais non par la tête (9).

10. Appareil électrique (1) selon la revendication 9, **caractérisé en ce que** la tige (10) est ancrée dans l'élément de montage (4) par son extrémité opposée à la tête (9) sans possibilité de déplacement dans l'axe de la tige (10), notamment en surmoulant l'élément de montage (4) autour de la tige (10).

11. Appareil électrique (1) selon l'une quelconque des revendications 1 à 10, **caractérisé en ce que** l'insert présente un passage de butée (15), au niveau duquel ledit insert peut être traversé par le deuxième moyen de butée (8), notamment un passage de butée (15) décalé du ou d'un passage de guide (18) pour guidage intérieur (17) de sorte que l'insert ne peut être dégagé de la tige (10) et du guidage intérieur (17) sans changer de position.

12. Appareil électrique (1) selon l'une quelconque des revendications 1 à 11, **caractérisé en ce que** le couvercle (5) comprend, d'une part, une plaque (20) présentant au moins une ouverture (31), et, d'autre part, au moins un enjoliveur (21), compatible avec le au moins un bloc fonctionnel et placé dans ladite au moins une ouverture (31), notamment du type comprenant un puits pour fiche électrique ou comprenant une manette d'interrupteur et sa base, la plaque (20) étant maintenue entre le au moins un enjoliveur (21) et l'élément de montage (4), de sorte que le moyen de fixation (6), maintenu dans l'élément de montage (4), agit sur le au moins un enjoliveur (21), lui-même agissant sur la plaque (20), elle-même reposant contre l'élément de montage (4).

13. Appareil électrique (1) selon la revendication 12, **caractérisé en ce que** le au moins un enjoliveur (21) est maintenu par deux moyens de fixation (6), positionnés à proximité de deux bords opposés dudit enjoliveur (21), et décalés l'un par rapport à l'autre, l'appareil électrique (1) comprenant en outre, deux moyens d'accrochage (22) dudit enjoliveur (21) à la plaque (20), disposés symétriquement aux moyens de fixation (6), et consistant essentiellement chacun en une patte munie de crochets et s'étendant à partir de l'enjoliveur (21), destinée à venir s'accrocher dans un trou prévu dans la plaque (20).

14. Appareil électrique (1) selon l'une quelconque des revendications 1 à 13, **caractérisé en ce qu'**il comprend, en outre, un joint arrière (25), au niveau de la face de l'élément de montage (4) destinée à être en contact avec la paroi, un joint d'interface (26), entre l'élément de montage (4) et le couvercle (5), formant la zone d'appui du couvercle (5) sur l'élément de montage (4), et notamment aussi un joint interne (27), préférentiellement d'une seule pièce avec le joint d'interface (26), entre une plaque (20) et au moins un enjoliveur (21) que comprend le couvercle (5), formant la zone d'appui dudit au moins un enjoliveur (21) sur la plaque (20).

15. Appareil électrique (1) selon l'une quelconque des revendications 1 à 14, **caractérisé en ce qu'**il présente une pluralité de blocs fonctionnels, éventuellement différents, un seul couvercle (5), comprenant une seule plaque (20) et une pluralité d'enjoliveur (21), chaque enjoliveur (21) correspondant à un bloc fonctionnel et étant maintenu par au moins deux moyens de fixation (6).
